# EUROPÄISCHE PATENTSCHRIFT

(11) **EP 1 524 908 B1**
(45) Veröffentlichungstag und Bekanntmachung des Hinweises auf die Patenterteilung: **30.08.2006**
(21) Anmeldenummer: 03763832.7
(22) Anmeldetag: 14.07.2003
(51) Int. Cl.: A22C 13/00

(54) **SCHLAUCHFÖRMIGE, ESSBARE NAHRUNGSMITTELHÜLLE, HERGESTELLT NACH DEM AMINOXIDVERFAHREN**
FLEXIBLE-HOSE-SHAPED EDIBLE FOODSTUFF WRAPPER PRODUCED ACCORDING TO THE AMINO OXIDE METHOD
ENVELOPPE TUBULAIRE COMESTIBLE POUR PRODUIT ALIMENTAIRE PRODUITE A PARTIR D'UN PROCEDE A AMINOXYDE

(30) Priorität: 15.07.2002 DE 10231810
(43) Veröffentlichungstag der Anmeldung: 27.04.2005
(73) Patentinhaber: Kalle GmbH, 65203 Wiesbaden (DE)
(72) Erfinder: GORD, Herbert, 55218 Ingelheim (DE); HAMMER, Klaus-Dieter, 55120 Mainz (DE); NEEFF, Rainer, 65203 Wiesbaden (DE); BERGHOF, Klaus, 07407 Rudolstadt-Schwarza (DE); EILERS, Markus, 49835 Wietmarschen-Lohne (DE); TAEGER, Eberhard, 07407 Weissbach (DE)
(74) Vertreter: Plate, Jürgen
(86) Internationale Anmeldenummer: PCT/EP2003/007585
(87) Internationale Veröffentlichungsnummer: WO 2004/006683

(56) Entgegenhaltungen:
- EP-A- 0 054 162
- EP-A- 0 662 283
- EP-A- 0 698 346
- EP-A- 0 958 743
- WO-A-01/45917
- WO-A-03/000060
- DE-A- 3 318 906
- DE-A- 10 009 979
- US-A- 3 833 022

## Beschreibung

Die Erfindung betrifft eine schlauchförmige, eßbare Nahrungsmittelhülle, die Cellulose, mindestens ein Protein und mindestens einen Füllstoff enthält. Eine derartige Hülle ist aus z.B. DE-A-100 09 979 bekannt.

Eßbare, d.h. für den Mitverzehr geeignete Nahrungsmittelhüllen sind seit langem bekannt. Die in der Praxis eingesetzten eßbaren Wursthüllen sind Naturdärme vom Rind, insbesondere vom Schwein oder vom Schaf, oder Kollagendärme. Die Kollagendärme werden aus dem Fasergewebe der tierischen Haut hergestellt, das in den Gerbereien durch Spezialmaschinen von der Innenseite der enthaarten frischen, gesalzenen oder leicht gekalkten Haut abgetrennt wird (s. G. Effenberger, *Wursthüllen - Kunstdarm,* Holzmann Buchverlag, Bad Wörishofen, 2. Aufl. [1991], S. 26/27). Sie werden daher auch als Hautfaserdärme bezeichnet. Naturdärme wie auch Kollagendärme sind durch Tierseuchen, wie BSE, zunehmend problematisch geworden.

In der nicht vorveröffentlichten DE 101 29 539 sind eßbare Nahrungsmittelhüllen offenbart, die nicht aus tierischem Gewebe hergestellt werden. Diese Hüllen bestehen im wesentlichen aus Cellulose, (pflanzlichem) Protein und Füllstoff. Die Herstellung erfolgt nach dem N-Methyl-morpholin-N-oxid(NMMO)-Verfahren. Dabei werden die Cellulose und das Protein in NMMO-Hydrat gelöst und mit dem Füllstoff vermischt. Die Mischung wird dann durch eine Ringdüse extrudiert. Der dabei entstehende Schlauch durchläuft zunächst eine etwa 2 bis 30 cm lange Luftstrecke bevor er in das Fällbad eintritt. In dem Fällbad erfolgt die Regeneration durch Fällflüssigkeit, die von innen und außen auf den Schlauch einwirkt. Die Fällflüssigkeit ist allgemein eine auf etwa 5 °C gekühlte, etwa 15 gew.-%ige wäßrige NMMO-Lösung.

Die beschriebenen Kollagendärme wie auch die Hüllen auf Basis von Cellulose, Protein und Füllstoff werden häufig in einer Form angeboten, bei der jeweils etwa 15 bis 50 m der Hülle zu etwa 20 bis 60 cm langen Raupen (engl. "sticks") zusammengeschoben sind. Das Raffen des Kunstdarms (auch als Aufstocken bezeichnet) ist seit langem bekannt und in der allgemeinen Fachliteratur ebenso wie in der Patentliteratur vielfach beschrieben (s. G. Effenberger, a.a.O., S. 58 - 60). Es erfolgt auf sogenannten Raffmaschinen. Vor dem Raffen ist die Hülle flachgelegt und aufgerollt. Sie wird dann von der Rolle abgezogen, aufgeblasen und auf den Raffdorn der Raffmaschine gezogen. Der Außendurchmesser des Raffdorns bestimmt dabei den Innendurchmesser der zu erzeugenden Raupe. Das Raffen stellt eine hohe Belastung für die Hülle dar. Unmittelbar vor oder während des Raffens wird sie daher üblicherweise von innen, von außen oder von beiden Seiten mit Wasser und/oder Öl besprüht oder benetzt, um sie geschmeidiger zu machen. Damit wird verhindert, daß sich an den Raffalten Risse bilden. Die Raffwerkzeuge selbst können ganz unterschiedlich ausgestaltet sein. Bekannt sind beispielsweise Raffräder, die außen glatt oder gezähnt sein können, daneben auch umlaufende Bänder. Ist die gewünschte Meterzahl gerafft, wird die Hülle abgeschnitten. Die so hergestellte Raupe soll möglichst formstabil und selbsttragend sein. Für Lagerung uhd Transport wird sie dennoch häufig mit einer Umverpackung versehen (allgemein ein Netz oder eine Folie). Bekannt sind schließlich auch Hüllen, die auf eine formstabile Hülse gerafft wurden. Die Raupe wird beim Füllen mit Wurstbrät wieder entrafft. Dabei werden oftmals etliche Raupen in einen Vorratsbehälter gelegt, aus dem dann einzelne Raupen automatisch entnommen und auf das Füllrohr der schnelllaufenden Füllmaschine geschoben werden. Dabei ist es von entscheidender Bedeutung, daß die Raupe nicht bricht. Ansonsten tritt eine Störung im Produktionsablauf ein, die aufwendig von Hand behoben werden muß.

Das nach dem Füllen notwendige Portionieren der Würste und Verschließen oder Abbinden der Wurstenden erfolgt üblicherweise ebenfalls automatisch. Auf solche Art werden u.a. auch Würstchen hergestellt. Die Portionierung des Würstchenbräts erfolgt dabei durch die Pumpe der Füllmaschine. Bei jeder Unterbrechung des Fördervorgangs wird durch Abdrehen die entsprechende Würstchenlänge erzeugt. Der gesamte Vorgang läuft vollautomatisch mit hoher Geschwindigkeit ab. Die Kette der so hergestellten Würstchen wird - ebenfalls maschinell - auf ein geeignetes Gestell gehängt, auf dem die Würstchen dann direkt in die weiteren Behandlungsstufen gebracht werden. Die Hülle bleibt auf der Wurst und wird mitverzehrt.

Die Haltbarkeit der Raupen auf Kollagenbasis ist unter Normalbedingungen äußerst gering. Zur Erhöhung der Lagerstabilität und Gewährleistung der Verarbeitbarkeit sind umfangreife Maßnahmen notwendig. Vor dem Einbringen in die Verkaufsverpackung ist eine aufwendige Konditionierung der Raupen zur Einstellung des Feuchtegehaltes erforderlich. Lagerung und Transport sind nur unter Kühlung möglich. Wegen der leichten Verderblichkeit ist nach dem Öffnen der Packung eine schnelle Verarbeitung notwendig. Ein weiterer Nachteil ist die ungenügende Stabilität des Endverschlusses der Raupe.

Es bestand daher die Aufgabe, eine eßbare künstliche Wursthülle zur Verfügung zu stellen, die die geschilderten Nachteile nicht mehr aufweist. Insbesondere soll die Hülle in geraffter Form eine deutlich verbesserte Lagerstabilität und Unempfindlichkeit gegenüber direktem Luftkontakt aufweisen. Darüber hinaus soll die Stabilität des Endverschlusses deutlich höher sein, d.h. der Endverschluß soll einen festeren Sitz auf der Hülle haben. Die Hülle soll sich auch problemlos füllen lassen. Dazu muß sie eine ausreichende mechanische Stabilität aufweisen, damit sie beim Füllen nicht platzt. Weiterhin bestand die konkrete Aufgabe, die in der eingangs genannten DE 101 29 539 offenbarte eßbare Nahrungsmittelhülle auf Cellulosebasis weiterzuentwickeln und vorteilhafte Konfektionierungsformen dafür zu finden.

Die Eigenschaften einer eßbaren Hülle der eingangs genannten Art lassen sich wesentlich verbessern, wenn in der Luftstrecke zwischen Ringdüse und Oberfläche des Fällbades eine kontrollierte Querverstreckung durch einen im Innern des Schlauches wirkenden Gasdruck stattfindet.

Gegenstand der voliegenden Anmeldung ist demgemäß eine schlauchförmige, eßbare Nahrungsmittelhülle, die Cellulose, mindestens ein Protein und mindestens einen Füllstoff enthält und die dadurch gekennzeichnet ist, daß das Verhältnis der Naßreißfestigkeit in Querrichtung zur Naßreißfestigkeit in Längsrichtung 1,3: 1 bis 1 : 3,5 beträgt. Bevorzugt beträgt das Verhältnis 1: 1,2 bis 1 : 2,5. In absoluten Zahlen beträgt die Naßreißfestigkeit (bestimmt gemäß DIN 53455) in Querrichtung etwa 3 bis 6 N/mm², die Naßreißfestigkeit in Längsrichtung etwa 5 bis 12 N/mm². Ohne Querverstreckung beträgt die Naßreißfestigkeit in Querrichtung nur etwa 1 bis 2 N/mm². Eine Hülle mit einer so geringen Reißfestigkeit in Querrichtung wäre praktisch kaum handhabbar und ließe sich nur mit großen Schwierigkeiten füllen.

Hergestellt wird die erfindungsgemäße Hülle nach dem NMMO-Verfahren. Dabei wird die Tatsache genutzt, daß Cellulose und bestimmte Proteine in Oxiden tertiärer Amine ohne chemische Veränderung (Derivatisierung) und ohne wesentlichen Abbau der Molekülketten löslich sind. N-Methyl-morpholin-N-oxid (NMMO) hat sich dabei als besonders geeignetes Aminoxid erwiesen. Bei der Lösungsherstellung wird mindestens ein feingemahlener Füllstoff zugegeben, der in Suspension bleibt.

Gegebenenfalls kann die Cellulose gegen ein anderes Gerüst-Kohlenhydrat, wie Carrageenan, ausgetauscht werden. Zur weiteren Modifikation der Eigenschaften, insbesondere der Kaubarkeit, werden der Spinnlösung zusätzliche organische oder anorganische Füllstoffe, gegebenenfalls auch Kurzfasern zugesetzt.

Der durchschnittliche Polymerisationsgrad DP der Cellulose beträgt dabei bevorzugt 300 bis 1.900, bevorzugt 400 bis 900. Anders als bei dem Viskoseverfahren nimmt der DP im Verlauf der Verarbeitung nur unwesentlich ab.Der Anteil der Cellulose in der fertigen Hülle beträgt allgemein etwa 20 bis 70 Gew.-%, bevorzugt 30 bis 60 Gew.-%, jeweils bezogen auf das Trockengewicht der Hülle.

Das Protein ist bevorzugt ein natürliches, globuläres Protein, insbesondere Casein, Sojaprotein, Gluten (Weizenprotein), Zein (Maisprotein), Ardein (Erdnußprotein) oder Erbsenprotein. Prinzipiell geeignet ist jedes Protein, das zusammen mit Cellulose in NMMO-Monohydrat löslich ist.Der Anteil des Proteins beträgt im allgemeinen 5 bis 50 Gew.-%, bevorzugt 8 bis 45 Gew.-%, jeweils bezogen auf das Trockengewicht der Nahrungsmittelhülle, d.h. das Gewicht der wasser- und glycerinfreien Hülle.

Die Füllstoffe sollen sich in der NMMO-Spinnlösung möglichst wenig lösen. In NMMO unlösliche Füllstoffe können bereits der Maische zugefügt werden bevor Wasser unter vermindertem Druck abdestilliert wird. Füllstoffe, die eine gewisse Löslichkeit in NMMO aufweisen, werden zweckmäßig erst unmittelbar vor der Extrusion mit der Spinnlösung vermischt.

Die Füllstoffpartikel sollten nicht größer als die Wanddicke der Hülle sein, andernfalls kann es zu Löchern oder Folienabrissen kommen. Die optimale Größe der Füllstoffpartikel richtet sich nach deren Art. Für Weizenkleie hat sich eine mittlere Korngröße von 60 bis 80 µm als besonders günstig erwiesen. Weizenkleiepartikel von mehr als 100 µm Größe sollten in jedem Fall vorher abgetrennt werden. Die Partikel können beispielsweise die Form von Kugeln, Ellipsoiden, Plättchen oder Nadeln haben. Sie können auch unregelmäßig geformt sein. Die Form hängt wesentlich ab von der Art des Füllstoffmaterials und dem Verfahren, wie es gemahlen wurde. Plättchen und ähnliche flache Partikel ordnen sich allgemein parallel zur Folienoberfläche an, so daß deren Länge auch größer sein kann als die Dicke der Folie.

Besonders geeignete organische Füllstoffe sind Kleie, insbesondere Weizenkleie, Chitosan, Guarkernmehl, Johannisbrotkernmehl oder mikrokristalline Cellulose. Die Weizenkleie nimmt im Verlauf der Verarbeitung durch die bekannte Maillard-Reaktion eine braune Farbe an und gibt dadurch auch der Hülle diese Farbe. Mit anderen Füllstoffen, wie Wachsmaisstärke (mit einer mittleren Partikelgröße von weniger als 50 µm), kristallinem Polylactid oder vernetztem Polyvinylpyrrolidon (Partikelgröße etwa 20 bis 80 µm, bevorzugt 30 bis 60 µm), läßt sich auch eine farblose Hülle herstellen. Anstelle der organischen Füllstoffe oder zusätzlich können auch feinteilige anorganische Füllstoffe zum Einsatz kommen. Beispiele dafür sind pulverförmiges CaCO₃, BaSO₄, CaSO₄, SiO₂ oder TiO₂. Der Anteil an Füllstoff(en) beträgt allgemein10 bis 70 Gew.-%, bevorzugt 30 bis 60 Gew.-%, jeweils bezogen auf das Trockengewicht der Hülle.

Die Spinnlösung enthält bevorzugt etwa 3 bis 15 Gew.-% Cellulose, etwa 1 bis 10 Gew.-% Protein und etwa 3 bis 15 Gew.-% Füllstoff, jeweils bezogen auf das Gesamtgewicht der Spinnlösung. Das in der Spinnlösung enthaltene Lösungsmittel besteht zu 60 bis 90 Gew.-% aus NMMO-Monohydrat. Diese Parameter, zusammen mit der Temperatur, bestimmen im wesentlichen die Viskosität und das Fließverhalten der Spinnlösung.

Falls erforderlich kann die Löslichkeit der Füllstoffe in NMMO-Monohydrat durch Vorvernetzung reduziert werden. Wie die Poteine unterbrechen die Füllstoffe die Struktur der Cellulose. Sie vermindern die Dehnbarkeit, ohne die Festigkeit zu beeinträchtigen.

Extrudiert wird die Spinnlösung durch die Ringspaltdüse vorzugsweise bei einer Temperatur von 85 bis 105°C. Der Ringspalt ist allgemein 0,1 bis 2,5 mm, bevorzugt 0,2 bis 1,0 mm weit. Die Weite muß dem "Verzug" (Quotient aus Ausströmgeschwindigkeit und Abzugsgeschwindigkeit) angepaßt sein.

Die Luftstrecke, d. h. die Strecke zwischen Ringspalt und Oberfläche des Spinnbades, in der die Blasverformung stattfindet, beträgt bevorzugt 1 bis 50 cm, besonders bevorzugt 2,5 bis 20 cm. Sie hängt auch vom Durchmesser (Kaliber) der Schlauchfolie nach der Blasverformung ab.

Die Blasverformung wird durch Druckluft oder andere Gase bewirkt, die durch Öffnungen im Düsenkörper in das Innere des Schlauches gelangen. Durch die Verstreckung in Querrichtung erhöht sich die Querfestigkeit des Schlauches erheblich.

Durch entsprechende Vorrichtungen im Düsenkörper gelangt Spinnbadlösung auch in das Innere des Celluloseschlauches. Der Spiegel des im Innern des Schlauches befindlichen sogenannten Innenbades liegt dabei im allgemeinen in etwa auf derselben Höhe wie der des Außenbades, kann aber auch etwas höher liegen. Durch das Innenbad verfestigt sich der Schlauch schneller; gleichzeitig wird ein Zusammenkleben der Innenseiten des Schlauches verhindert.

Zur weiteren Verfestigung passiert der flachgelegte Schiauch dann noch mehrere NMMO-haltige Fällkufen. Der NMMO-Anteil in der ersten Fällkufe beträgt etwa 10 bis 20 Gew.-%, bevorzugt etwa 15 Gew.-%. Er nimmt in den folgenden Kufen ab. Die Temperatur in den Fällkufen steigt stufenweise an und erreicht in der letzten Kufe 70 bis 80°C.

An die Fällstrecke schließen sich mit Wasser von 40 bis 60°C gefüllte Kufen an, in denen letzte Spuren von NMMO aus dem Schlauch entfernt werden. Es folgt dann eine Weichmacherkufe. Diese enthält eine wäßrige Lösung eines Plastifizierungsmittels für Cellulose. Geeignete Plastifizierungsmittel sind Polyole und Polyglykole, besonders Glycerin. Entsprechend dem vorgesehenen Verwendungszweck können die Hüllen darüber hinaus auf der Innen- und/oder Außenseite mit einer Imprägnierung oder Beschichtung versehen sein, beispielsweise einer Flüssigrauchimprägnierung oder einer Ausrüstung zur weiteren Erhöhung der Raupenstabilität. Anschließend wird das Material getrocknet. Der Durchmesser entspricht danach in etwa dem ursprünglichen Düsendurchmesser, vorzugsweise liegt er darüber.

Der Feuchtegehalt beim Verlassen des Trockners bewegt sich zwischen 8 und 20 %. Durch Variation des Längs-/Querverzuges beim Trocknen können dem Material, je nach späterem Anwendungszweck, besondere Eigenschaften verliehen werden. Nach Verlassen des Trockners kann der Schlauch wieder angefeuchtet werden auf einen Wassergehalt von 14 bis 24 Gew.-%, bevorzugt 16 bis 18 Gew.-%, jeweils bezogen auf das Gesamtgewicht des Schlauches. Anschließend kann er mit Hilfe eines Quetschwalzenpaares flachgelegt und aufgewickelt werden. Das Nennkaliber der erfindungsgemäßen Hülle beträgt 14 bis 50 mm, bevorzugt 16 bis 30 mm.

Als besonders geeignete Zusammensetzungen des fertigen Schlauches haben sich folgende Anteile bewährt:
20 bis 60 Gew.-% Cellulose
10 bis 30 Gew.-% Protein:
10 bis 70 Gew.-% Füllstoff (organisch und/oder anorganisch)

Das Raffen der nach dem NMMO-Verfahren hergestellten eßbaren Nahrungsmittelhüllen kann nach an sich bekannten Verfahren erfolgen. Geeignete Raffverfahren sind beispielsweise in den DE-B 12 68 011, DE-C 16 32 137, 21 47 498 sowie 22 36 600 beschrieben. Dabei werden jeweils etwa 10 bis 50 m, bevorzugt etwa 16 bis 30 m, der Hülle zu einer Raffraupe aufgestockt.

Die zu einer Raupe komprimierte Hülle muß an einem Ende bereits mit einem Verschluß versehen sein, damit das Füllgut nicht auf den Fülltisch gerät und die nachfolgende Würstchenkette verunreinigt. Der Verschluß muß so ausgebildet sein, daß er den Austritt von Wurstbrät verhindert, nicht jedoch den Luftaustritt, da sonst der Druckausgleich im Inneren behindert würde. Bei Verwendung zusätzlicher, separater Verschlußmaterialien, wie Clips oder Klammern aus Kunststoff oder Metall, besteht stets die Gefahr, daß diese mit dem Brät ins Würstcheninnere geraten. Es ist daher vorteilhaft, wenn der Verschluß durch Verdrillen oder Verknoten aus dem Hüllenmaterial selbst gebildet wird (DE-C 12 97 508, 15 32 029, 23 17 867; EP-A 129 100).

Häufig wird der Endverschluß dadurch erzeugt, daß ein kurzes Stück der Raupe mit einer speziellen Zange herausgezogen und nach kurzer Drehung in das Raupeninnere zurückgeschoben wird. Eine andere Möglichkeit besteht darin, mit einem besonders geformten Schlagbolzen die letzten Millimeter der Raupe zu deformieren und gleichzeitig in deren Innenbohrung zu schieben.

Nach dem beschriebenen NMMO-Verfahren lassen sich eßbare Hüllen auf umweltfreundlichem Wege und in deutlich weniger Prozeßschritten als bislang üblich herstellen. Die dabei erhaltenen Hüllen zeigen darüber hinaus deutliche Vorteile gegenüber den bekannten Hüllen auf Kollagenbasis. Dies betrifft insbesondere die einfachere Konditionierung vor dem Raffen, die Lagerstabilität der Raupen selbst bei Normalklima sowie die längere Haltbarkeit nach dem Öffnen der Verpackung. Zudem ist der Verarbeitungsprozeß aufgrund des stabileren Endverschlusses bedeutend sicherer.

Eine zusätzliche Konditionierung der Raupen vor der Verpackung ist nicht erforderlich. Daneben ist das Material im verpackten Zustand ohne besondere Kühlung oder Klimatisierung und ohne Veränderung der mechanischen Eigenschaften lagerfähig. Zudem erfolgt nach dem Öffnen der Verpackung und dem damit verbundenen Luftzutritt kein mikrobieller Angriff, der zu einer Schädigung des Materials führt.

Die erfindungsgemäße Raffraupe eignet sich besonders zur Verarbeitung auf schnellaufenden Füllmaschinen. Die Raupen lassen sich auf dem Stopfhorn problemlos entraffen und mit Wurstbrät füllen. Besonders geeignet sind die erfindungsgemäßen Raupen bei der Herstellung von Koch- und Brüh- und Bratwürsten, speziell von Würstchen, bei denen die Hülle mitverzehrt wird.

Die folgenden Beispiele dienen der näheren Erläuterung der Erfindung. Prozente sind darin Gewichtsprozente, soweit nicht anders angegeben oder aus dem Zusammenhang ersichtlich.

### Beispiel 1

Ein eßbarer Schlauch vom Kaliber 22 mm wurde nach dem Aminoxidverfahren hergestellt und mit Glycerin plastifiziert, getrocknet und aufgespult. Die Zusammensetzung des Feststoffanteils betrug 40 % Cellulose, 10 % Zein und 50 % gemahlene Weizenkleie.

Des weiteren hatte der Schlauch einen Wassergehalt von 18 % und einen Glyceringehalt von 25 %, jeweils bezogen auf das Gesamtgewicht der Hülle.

Die Zwischenlagerung erfolgte in einer Klimakammer. Beim anschließenden Raffen wurde der Schlauch von der Rolle abgezogen und in Abschnitten von jeweils 16,7 m Länge nach einem der bekannten Raffverfahren unter Aufbringen von Triglycerid zu einer etwa 34 cm langen Raupe geformt.
In einem anschließenden Schritt wurde die Raupe dann mit einem Endverschluß versehen. Dazu wurden die Raupen einzeln in eine entsprechend geformte Vorrichtung geschoben und die letzten Fältelungen unter mechanischer Deformation in die Raupenbohrung eingedrückt. Anschließend wurden die Raupen in Folie verpackt in einen Karton gelegt. Die Folie war so geformt, daß die Raupen beim Verbraucher ohne Bruchgefahr entnommen und in das Magazin der automatischen Füllmaschine überführt werden konnte.

Ein Teil des Materials wurde sofort auf einer automatischen Füllmaschine (®FrankAMatic) mit Würstchenbrät gefüllt, gebrüht und geräuchert. Ein zweiter Teil der Raupen wurde erst nach 3-monatiger Lagerung unter Raumbedingungen in gleicher Weise verarbeitet. Hierbei besaßen die Raupen in Bezug auf Festigkeit und Feuchtegehalt gleiche Eigenschaften. Es wurde in beiden Fällen ein gutes Verarbeitungsverhalten festgestellt. Die Würstchen waren problemlos beiß- und kaubar.

### Beispiel 2

Ein eßbarer Schlauch vom Kaliber 26 mm wurde nach dem Aminoxidverfahren hergestellt und mit Glycerin plastifiziert, getrocknet und aufgespult. Die Zusammensetzung des Feststoffanteils betrug 30 % Cellulose, 20 % Zein, 25 % gemahlene Weizenkleie und 25 % CaCO₃.

Des weiteren hatte der Schlauch einen Wassergehalt von 18 % und einen Glyceringehalt von 25 %, jeweils bezogen auf das Gesamtgewicht der Hülle.

Die Zwischenlagerung erfolgte in einer Klimakammer. Beim anschließenden Raffen wurde der Schlauch von der Rolle abgezogen und in Abschnitten von jeweils 16,7 m Länge nach einem der bekannten Raffverfahren unter Aufbringen von Triglycerid zu einer etwa 36 cm langen Raupe geformt.

In einem anschließenden Schritt wurde die Raupe dann mit einem Endverschluß versehen. Dazu wurden die Raupen einzeln in eine entsprechend geformte Vorrichtung geschoben und die letzten Fältelungen unter mechanischer Deformation in die Raupenbohrung eingedrückt. Anschließend wurden die Raupen in Folie verpackt in einen Karton gelegt. Die Folie war so geformt, daß die Raupen beim Verbraucher ohne Bruchgefahr entnommen und in das Magazin der automatischen Füllmaschine überführt werden konnte.

Die Weiterverarbeitung erfolgte wie in Beispiel 1 beschrieben. Die Raupen besaßen in Bezug auf Festigkeit und Feuchtegehalt gleiche Eigenschaften. Es wurde in beiden Fällen ein gutes Verarbeitungsverhalten festgestellt. Die Würstchen waren problemlos beiß- und kaubar.

## Patentansprüche

1. Schlauchförmige, eßbare Nahrungsmittelhülle, die Cellulose, mindestens ein Protein und mindestens einen Füllstoff enthält, **dadurch gekennzeichnet, daß** die Naßreißfestigkeit, bestimmt gemäß DIN 53455, in Querrichtung 3 bis 6 N/mm² und in Längsrichtung 5 bis 12 N/mm² beträgt und das Verhältnis der Naßreißfestigkeit in Querrichtung zur Naßreißfestigkeit in Längsrichtung 1,3 : 1 bis 1 : 3,5 beträgt.

2. Hülle gemäß Anspruch 1, **dadurch gekennzeichnet, daß** das Verhältnis der Naßreißfestigkeit in Querrichtung zur Naßreißfestigkeit in Längsrichtung 1 : 1,2 bis 1 : 2,5 beträgt.

3. Hülle gemäß Anspruch 1 oder 2, **dadurch gekennzeichnet, daß** die Cellulose einen durchschnittlichen Polymerisationsgrad DP von 300 bis 1.900, bevorzugt 400 bis 900, aufweist.

4. Hülle gemäß einem oder mehreren der Ansprüche 1 bis 3, **dadurch gekennzeichnet, daß** der Anteil der Cellulose 20 bis 70 Gew.-%, bevorzugt 30 bis 60 Gew.-%, beträgt, jeweils bezogen auf das Trockengewicht der Hülle.

5. Hülle gemäß einem oder mehreren der Ansprüche 1 bis 4, **dadurch gekennzeichnet, daß** das Protein ein natürliches, globuläres Protein, bevorzugt Casein, Sojaprotein, Gluten, Zein, Ardein oder Erbsenprotein ist.

6. Hülle gemäß einem oder mehreren der Ansprüche 1 bis 5, **dadurch gekennzeichnet, daß** der Anteil des mindestens einen Proteins 5 bis 50 Gew.-%, bevorzugt 8 bis 45 Gew.-%, beträgt, jeweils bezogen auf das Trockengewicht der Nahrungsmittelhülle.

7. Hülle gemäß einem oder mehreren der Ansprüche 1 bis 6, **dadurch gekennzeichnet, daß** der Füllstoff ein organischer Füllstoff ist, bevorzugt Kleie, besonders bevorzugt Weizenkleie, Chitosan, Guarkernmehl, Johannisbrotkernmehl, mikrokristalline Cellulose, Wachsmaisstärke, kristallinem Polylactid oder vernetztem Polyvinylpyrrolidon.

8. Hülle gemäß einem oder mehreren der Ansprüche 1 bis 6, **dadurch gekennzeichnet, daß** der Füllstoff ein anorganischer Füllstoff ist, bevorzugt partikelförmiges CaCO₃, BaSO₄, CaSO₄, SiO₂ oder TiO₂.

9. Hülle gemäß einem oder mehreren der Ansprüche 1 bis 8, **dadurch gekennzeichnet, daß** der Anteil an Füllstoff(en) 10 bis 70 Gew.-%, bevorzugt 30 bis 60 Gew.-%, beträgt, jeweils bezogen auf das Trockengewicht der Hülle.

10. Hülle gemäß einem oder mehreren der Ansprüche 1 bis 9, **dadurch gekennzeichnet, daß** sie ein Nennkaliber von 14 bis 50 mm, bevorzugt 16 bis 30 mm, hat.

11. Hülle gemäß einem oder mehreren der Ansprüche 1 bis 10, **dadurch gekennzeichnet, daß** sie 8 bis 24 Gew.-%, bevorzugt 16 bis 18 Gew.-%, an Wasser enthält.

12. Hülle gemäß einem oder mehreren der Ansprüche 1 bis 11, **dadurch gekennzeichnet, daß** sie einen Weichmacher, bevorzugt Glycerin, enthält.

13. Hülle gemäß einem oder mehreren der Ansprüche 1 bis 12, **dadurch gekennzeichnet, daß** etwa 10 bis 50 m, bevorzugt etwa 16 bis 30 m, davon zu einer Raupe gerafft sind.

14. Hülle gemäß Anspruch 14, **dadurch gekennzeichnet, daß** die Raupe mit einem Endverschluß versehen ist.

15. Hülle gemäß Anspruch 13 oder 14, **dadurch gekennzeichnet, daß** die Raupe von einer luft- und wasserdampfdichten Verpackung umgeben ist.

16. Verwendung der Hülle nach einem oder mehreren der Ansprüche 1 bis 15 auf einer Füllvorrichtung bei der Herstellung von Koch-, Brüh- oder Bratwürsten, bevorzugt bei der Herstellung von Würstchen.

## Claims

1. A tubular, edible food casing which comprises cellulose, at least one protein and at least one filler, wherein the wet tear strength, determined as specified in DIN 53455, in the transverse direction is from 3 to 6 N/mm², and in the longitudinal direction is from 5 to 12 N/mm² and wherein the ratio of the wet tear strength in the transverse direction to the wet tear strength in the longitudinal direction is from 1.3:1 to 1:3.5.

2. The casing as claimed in claim 1, wherein the ratio of the wet tear strength in the transverse direction to the wet tear strength in the longitudinal direction is from 1:1.2 to 1:2.5.

3. The casing as claimed in claim 1 or 2, wherein the cellulose has a mean degree of polymerization DP from 300 to 1900, preferably from 400 to 900.

4. The casing as claimed in one or more of claims 1 to 3, wherein the cellulose content is from 20 to 70 % by weight, preferably from 30 to 60 % by weight, in each case based on the dry weight of the casing.

5. The casing as claimed in one or more of claims 1 to 4, wherein the protein is a natural globular protein, preferably casein, soybean protein, gluten, zein, ardein or pea protein.

6. The casing as claimed in one or more of claims 1 to 5, wherein the content of the at least one protein is from 5 to 50 % by weight, preferably from 8 to 45 % by weight, in each case based on the dry weight of the food casing.

7. The casing as claimed in one or more of claims 1 to 6, wherein the filler is an organic filler, preferably bran, particularly preferably wheat bran, chitosan, guar seed meal, carob bean meal, microcrystalline cellulose, waxy maize starch, crystalline polylactide, or crosslinked polyvinylpyrrolidone.

8. The casing as claimed in one or more of claims 1 to 6, wherein the filler is an inorganic filler, preferably particulate CaCO₃, BaSO₄, CaSO₄, SiO₂ or TiO₂.

9. The casing as claimed in one or more of claims 1 to 8, wherein the content of filler(s) is from 10 to 70 % by weight, preferably from 30 to 60 % by weight, in each case based on the dry weight of the casing.

10. The casing as claimed in one or more of claims 1 to 9, wherein it has a nominal caliber of from 14 to 50 mm, preferably from 16 to 30 mm.

11. The casing as claimed in one or more of claims 1 to 10, wherein it comprises from 8 to 24 % by weight, preferably from 16 to 18 % by weight of water.

12. The casing as claimed in one or more of claims 1 to 11, wherein it comprises a plasticizer, preferably glycerol.

13. The casing as claimed in one or more of claims 1 to 12, wherein from about 10 to 50 m, preferably from about 16 to 30 m, thereof are shirred to form a stick.

14. The casing as claimed in claim 14, wherein the stick is provided with an end closure.

15. The casing as claimed in claim 13 or 14, wherein the stick is surrounded by an air-tight and water vapor-tight packaging.

16. The use of the casing as claimed in one or more of claims 1 to 15 on a stuffing apparatus in the production of cooked-meat sausages, scalded-emulsion sausages or frying sausages, preferably in the production of small sausages.

## Revendications

1. Enveloppe tubulaire comestible pour produits alimentaires, qui contient de la cellulose, au moins une protéine et au moins une charge, **caractérisée en ce que** la ténacité au mouillé, déterminée selon la norme DIN 53455, varie de 3 à 6 N/mm² dans la direction transversale et de 5 à 12 N/mm² dans la direction longitudinale, et le rapport entre la ténacité au mouillé dans la direction transversale et la ténacité au mouillé dans la direction longitudinale est de 1,3/1 à 1/3,5.

2. Enveloppe selon la revendication 1, **caractérisée en ce que** le rapport entre la ténacité au mouillé dans la direction transversale et la ténacité au mouillé dans la direction longitudinale est de 1/1,2 à 1/2,5.

3. Enveloppe selon la revendication 1 ou 2, **caractérisée en ce que** la cellulose présente un degré de polymérisation moyen DP de 300 à 1 900, de préférence de 400 à 900.

4. Enveloppe selon une ou plusieurs des revendications 1 à 3, **caractérisée en ce que** la teneur en cellulose est de 20 à 70 % en poids, de préférence de 30 à 60 % en poids, respectivement par rapport au poids sec de l'enveloppe.

5. Enveloppe selon une ou plusieurs des revendications 1 à 4, **caractérisée en ce que** la protéine est une protéine naturelle, globulaire, de préférence de la caséine, de la protéine de soja, du gluten, de la zéine, de l'ardéine ou de la protéine de petits pois.

6. Enveloppe selon une ou plusieurs des revendications 1 à 5, **caractérisée en ce que** la teneur de la au moins une protéine est de 5 à 50 % en poids, de préférence 8 à 45 % en poids, respectivement par rapport au poids sec de l'enveloppe pour produits alimentaires.

7. Enveloppe selon une ou plusieurs des revendications 1 à 6, **caractérisée en ce que** la charge est une charge organique, de préférence du son, particulièrement de préférence du son de blé, du chitosane, de la fleur de farine de guar, de la fleur de farine de caroube, de la cellulose microcristalline, de l'amidon de maïs cireux, du polylactide cristallin ou de la polyvinylpyrrolidone réticulée.

8. Enveloppe selon une ou plusieurs des revendications 1 à 6, **caractérisée en ce que** la charge est une charge anorganique, de préférence du CaCO₃, BaSO₄, CaSO₄, SiO₂ ou TiO₂ sous forme particulaire.

9. Enveloppe selon une ou plusieurs des revendications 1 à 8, **caractérisée en ce que** la teneur en charge est de 10 à 70 % en poids, de préférence 30 à 60 % en poids, respectivement par rapport au poids sec de l'enveloppe.

10. Enveloppe selon une ou plusieurs des revendications 1 à 9, **caractérisée en ce qu'**elle a un calibre nominal de 14 à 50 mm, de préférence 16 à 30 mm.

11. Enveloppe selon au moins l'une quelconque des revendications 1 à 10, **caractérisée en ce qu'**elle contient 8 à 24 % en poids, de préférence 16 à 18 % en poids d'eau.

12. Enveloppe selon une ou plusieurs des revendications 1 à 11, **caractérisée en ce qu'**elle contient un plastifiant, de préférence de la glycérine.

13. Enveloppe selon l'une quelconque des revendications 1 à 12, **caractérisée en ce qu'**environ 10 à 50 m, de préférence environ 16 à 30 m, de celle-ci sont ramenés en configuration de chenille.

14. Enveloppe selon la revendication 13, **caractérisée en ce que** la configuration de type chenille est dotée d'une fermeture d'extrémité.

15. Enveloppe selon l'une quelconque des revendications 13 ou 14, **caractérisée en ce que** la configuration de type chenille est entourée par un emballage étanche à la vapeur d'eau et à l'air.

16. Utilisation de l'enveloppe selon une ou plusieurs des revendications 1 à 15 dans un dispositif de remplissage lors de la fabrication de saucisses, saucisses à cuire, ou à bouillir, ou à griller, de préférence lors de la fabrication de petites saucisses.
